# EUROPEAN PATENT SPECIFICATION

(11) **EP 2 752 748 B1**
(45) Date of publication and mention of the grant of the patent: **21.08.2019**
(21) Application number: 13779718.9
(22) Date of filing: 02.04.2013
(51) Int. Cl.: G06F 3/0488, H04M 1/67

(54) **SCREEN UNLOCKING METHOD AND DEVICE**
BILDSCHIRMFREIGABEVERFAHREN SOWIE GERÄT DAFÜR
PROCÉDÉ ET DISPOSITIF DE DÉVERROUILLAGE D'ÉCRAN

(30) Priority: 29.11.2012 CN 201210499291
(43) Date of publication of application: 09.07.2014
(60) Divisional application: 19183647.7
(73) Proprietor: Huawei Technologies Co., Ltd., Longgang District Shenzhen, Guangdong 518129 (CN)
(72) Inventor: WANG, Dedong, Shenzhen, Guangdong 518129 (CN)
(74) Representative: Gill Jennings & Every LLP
(86) International application number: PCT/CN2013/073663
(87) International publication number: WO 2014/082406

(56) References cited:
- WO-A2-2012/093784
- CN-A- 101 604 223
- CN-A- 102 609 198
- CN-A- 102 624 979
- CN-A- 102 693 085
- CN-A- 102 799 351
- CN-A- 102 968 262
- US-A1- 2010 162 182
- US-A1- 2010 269 040
- US-A1- 2012 053 887

## Description

### TECHNICAL FIELD

The present disclosure relates to the field of touch control technologies, and in particular, to a screen unlocking method and device.

### BACKGROUND

A screen locking function is one of the major functions of a touch device. The application of the screen locking function brings about a lot of convenience to the life of users. When the touch device is in an idle or a not-in-use state, a user can lock the screen by using the screen locking function, which can save power consumption to prolong the standby time of the touch device, and prevent unexpected misoperations performed by the user on the touch device due to negligence when the touch device is in the idle or not-in-use state.

After the touch device enters a screen-locked state, the user is generally required to unlock the touch device to set the touch device to a working state. In the prior art, the user generally unlocks the touch device by using a finger or a stylus to slide on the touch display screen of the touch device. Currently, a touch device can generally provide two unlocking manners, which are specifically as follows:
The first manner is shortcut unlocking. After the user unlocks the touch device, the user directly enters a function interface corresponding to the shortcut.

The second manner is password pattern unlocking. After the user inputs a password pattern, the touch device verifies the password pattern input by the user; after the verification succeeds, the touch device is unlocked to enable the user to enter a home screen of the touch device.

The foregoing first unlocking manner enables the user to enter the function interface quickly, but the touch device does not authenticate the user identity, which leads to a defect in system security. The foregoing second unlocking can effectively ensure security, but the user can only enter the home screen of the touch device after the touch device is unlocked, and the user needs to perform a further interaction operation with the touch device to enter a desired function interface. As a result, the operations are complex and the unlocking time is long.

International Patent Application (WO 2012093784, Pub. NO.) discloses an information display device comprising a display module including a touch screen; a controller displaying a lock image in the display module when the touch screen is in a locking state, and displaying a first icon indicating the locking state of the touch screen on the lock image, a first region for releasing the locking state of the touch screen on the lock image, and a second region indicating a second icon linked to an application program on the lock image. The controller may display a window requesting a password in the display module when the first icon is located in the first region, and displays a desktop image in the display module when the password is input.

US 2010/0162182 relates to a method and apparatus for unlocking electronic appliances.

### SUMMARY

The objective of aspects of the present disclosure is to provide a screen unlocking method and device, which can save the unlocking time of a user, thereby improving user experience while effectively ensuring system security of a touch device.

Various aspects of the present disclosure have been defined in the independent claims. Further technical features of each of these aspects have been defined in the respective dependent claims. In the screen unlocking method and device provided in the aspects of the present disclosure, a screen unlocking interface includes both a password unlocking area and a shortcut unlocking area; and password unlocking and shortcut unlocking are performed by receiving unlocking patterns input by a user in the foregoing two areas respectively. Therefore, through a screen unlocking interface, the user can perform not only password unlocking but also shortcut unlocking, where the password unlocking can effectively ensure the system security of a touch device and the shortcut unlocking enables the user to enter a desired function interface quickly. Therefore, the user performs both password unlocking and shortcut unlocking by interacting with the touch device only once, which effectively shortens the unlocking time of the user. In addition, the operation is convenient, thereby effectively improving user experience.

### BRIEF DESCRIPTION OF DRAWINGS

To illustrate the technical solutions in the aspects of the present disclosure more clearly, the following briefly introduces the accompanying drawings required for describing the aspects. Apparently, the accompanying drawings in the following description show merely some aspects of the present disclosure, and a person of ordinary skill in the art may still derive other drawings from these accompanying drawings without creative efforts.
FIG. 1 is a schematic flowchart of a screen unlocking method according to an aspect of the present disclosure;
FIG. 2 is an exemplary schematic diagram of a screen unlocking interface in the screen unlocking method illustrated in FIG. 1;
FIG. 3 is another exemplary schematic diagram of a screen unlocking interface in the screen unlocking method illustrated in FIG. 1;
FIG. 4 is another exemplary schematic diagram of a screen unlocking interface in the screen unlocking method illustrated in FIG. 1;
FIG. 5 is another exemplary schematic diagram of a screen unlocking interface in the screen unlocking method illustrated in FIG. 1;
FIG. 6 is another exemplary schematic diagram of a screen unlocking interface in the screen unlocking method illustrated in FIG. 1;
FIG. 7 is another schematic flowchart of a screen unlocking method according to an aspect of the present disclosure;
FIG. 8 is a schematic structural diagram of a screen unlocking apparatus according to an aspect of the present disclosure;
FIG. 9 is another schematic structural diagram of a screen unlocking apparatus according to an aspect of the present disclosure;
FIG. 10 is another schematic structural diagram of a screen unlocking apparatus according to an aspect of the present disclosure; and
FIG. 11 is a schematic structural diagram of a touch device according to an aspect of the present disclosure.

### DESCRIPTION OF ASPECTS

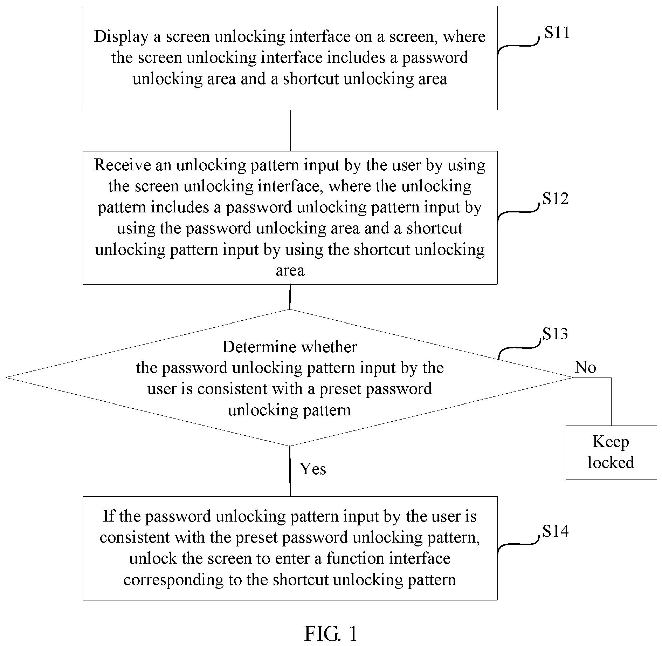

The following clearly describes the technical solutions in the aspects of the present disclosure with reference to the accompanying drawings in the aspects of the present disclosure. Apparently, the described aspects are merely a part rather than all of the aspects of the present disclosure. All other aspects obtained by a person of ordinary skill in the art based on the aspects of the present disclosure without creative efforts shall fall within the protection scope of the present disclosure. An aspect of the present disclosure provides a screen unlocking method, where the screen unlocking method is executed by a touch device, and the touch device itself. As shown in FIG. 1, the screen unlocking method includes the following steps: S11. Display a screen unlocking interface on a screen, where the screen unlocking interface includes a password unlocking area and a shortcut unlocking area.

Assuming that the touch device is a handset, when the handset is in a dormant state or a standby state, if a power button or a function button used for unlocking is pressed, a screen unlocking interface is displayed on the handset screen.

In this step, the screen unlocking interface provided by the touch device includes a password unlocking area and a shortcut unlocking area. The password unlocking area is used to receive a password unlocking pattern input by a user to perform password unlocking, where the password unlocking refers to that the user inputs, through the password unlocking area, a password pattern (also called password) for unlocking; the touch device verifies whether the password pattern input by the user is consistent with a password pattern which is preset by the user by using the touch device; if the password pattern input by the user is consistent with the preset password pattern, the touch device is unlocked; otherwise, the touch device keeps a screen-locked state. The password unlocking can effectively ensure system security of the touch device. The shortcut unlocking area is used to receive a shortcut unlocking pattern input by the user to perform shortcut unlocking, where the shortcut unlocking refers to that the user selects a shortcut and the touch device activates a function corresponding to the shortcut selected by the user. The shortcut unlocking enables the user to enter a desired function interface quickly.

It should be particularly noted that in the aspect of the present disclosure, the screen unlocking interface provided by the touch device includes both a password unlocking area and a shortcut unlocking area. Therefore, the user can perform password unlocking and shortcut unlocking through only one screen unlocking interface, that is, the user can complete the foregoing two types of unlocking by interacting with the touch device only once, instead of interacting with the touch device multiple times, which enables the user to enter a desired function interface quickly, thereby shortening the unlocking time of the user. In addition, the password unlocking effectively ensures system security of the touch device, thereby effectively improving user experience.

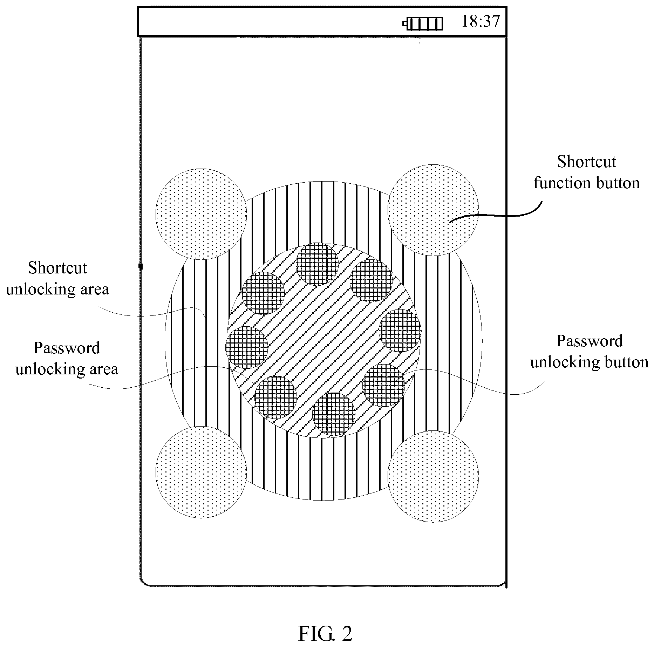

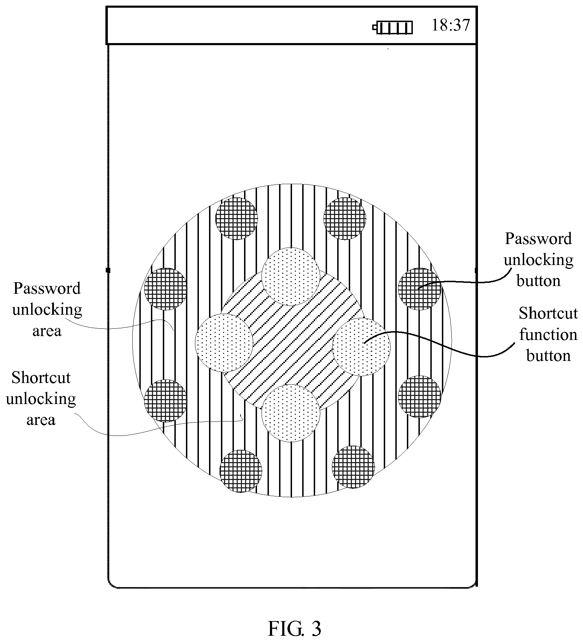

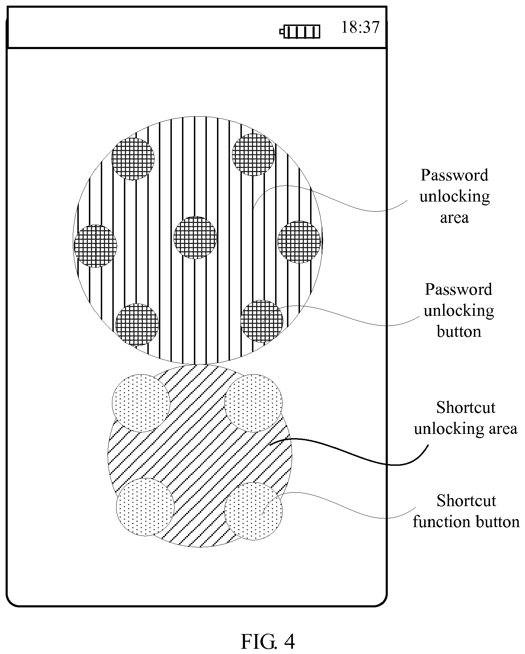

For example, on the screen unlocking interface, positional relationships between the password unlocking area and the shortcut unlocking area may include the following three types:
First, on the screen unlocking interface, the password unlocking area may be surrounded by the shortcut unlocking area. For example, the password unlocking area is located at the center of the screen of the touch device, while the shortcut unlocking area is set around the password unlocking area. For details about this type of positional relationship, reference may be made to a screen unlocking interface illustrated in FIG. 2.
Second, with reference to a screen unlocking interface illustrated in FIG. 3, on the screen unlocking interface, the shortcut unlocking area may be surrounded by the password unlocking area. For example, the shortcut unlocking area is located at the center of the screen of the touch device, while the password unlocking area is set around the shortcut unlocking area.
Third, with reference to a screen unlocking interface illustrated in FIG. 4, on the screen unlocking interface, the password unlocking area and the shortcut unlocking area may also be adjacent in a vertical distribution. For example, the shortcut unlocking area is located at a lower part of the screen of the touch device, while the password unlocking area is located above the shortcut unlocking area. Definitely, the password unlocking area and the shortcut unlocking area may also be adjacent in a horizontal distribution.

It should be noted that, in this distribution manner, of the password unlocking area and the shortcut unlocking area, which area is on the left and which area is on the right, or which area is upper and which area is lower are not limited in the present disclosure. In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

It should be noted that, in the aspect of the present disclosure, on the screen unlocking interface, the password unlocking area may be distinguished from the shortcut unlocking area by using a color, a frame, or a boundary line. For example, the foregoing two unlocking areas are filled with different colors, the foregoing two unlocking areas are delineated by using their respective frames, and/or a boundary line is set between the foregoing two unlocking areas. How to distinguish the password unlocking area from the shortcut unlocking area on the screen unlocking interface is not limited in the present disclosure, and may be set by a person skilled in the art freely.

It may be understood that, although the screen unlocking interface displayed in this step includes a password unlocking area and a shortcut unlocking area, there may be no obvious difference between the two unlocking areas. As long as a screen unlocking interface includes an area where the user performs password unlocking and an area where the user performs shortcut unlocking, the screen unlocking interface can be considered to include a password unlocking area and a shortcut unlocking area, no matter how these two areas are distributed. For example, on the screen unlocking interface, the password unlocking area and the shortcut unlocking area may be combined into one area, that is, the user can perform password unlocking and shortcut unlocking through one area only, and this area may be considered to be the password unlocking area and the shortcut unlocking area. Specifically, in the aspect of the present disclosure, on the screen unlocking interface, the shape of the password unlocking area is not limited, and the password unlocking area may be designed into any shape. For example, the password unlocking area may be designed into a circle or a regular or irregular polygon. Similarly, the shape of the shortcut unlocking area is not limited, and the shortcut unlocking area may be designed into any shape. For example, the shortcut unlocking area may be designed into a circle or a regular or irregular polygon.

In an aspect of the present disclosure, for example, reference may be made to the screen unlocking interface illustrated in any one of FIG. 2 to FIG. 4, the password unlocking area may include at least two password buttons, and a user may input an unlocking password by pressing or sliding over these buttons according to a specific rule. For example, these buttons may be distributed in a ring or be arranged in an array or be arranged at random, where each password button may be designed into a circle, a quadrilateral, or other regular polygons or irregular polygons, and the password buttons may be designed into the same shape or different shapes. Optionally, characters such as numbers and letters, or graphics, for example, flower graphics, imitative emotion graphics, and the like, may be set on the password buttons.

In an aspect of the present disclosure, for example, reference may be made to the screen unlocking interface illustrated in any one of FIG. 2 to FIG. 4, a shortcut unlocking area may include at least two shortcut function buttons; and a user may perform shortcut unlocking by selectively pressing or sliding over a shortcut function button, so that the touch device enters a function interface corresponding to the shortcut function button. For example, these buttons may be distributed in a ring or be arranged in an array or be arranged at random, where each shortcut function button may be designed into a circle, a quadrilateral, or other regular polygons or irregular polygons, and the shortcut function buttons may be designed into the same shape or different shapes. On each shortcut function button, a function description or an icon corresponding to a function is set. For example, the shortcut unlocking area includes four shortcut function buttons, where, function descriptions, namely, "short message", "telephone book", "dialer", and "music player" are set on the four shortcut function buttons, or icons corresponding to the foregoing four functions are disposed respectively on the four shortcut function buttons.

It should be noted that the setting of password buttons or the setting of shortcut function buttons is not limited in the present disclosure. For example, the password buttons and the shortcut function buttons may be set in, but not limited to, the foregoing distribution manners. In addition, the password unlocking buttons and the shortcut function buttons may be designed into any shape.

To help understanding, the following describes the screen unlocking interface displayed by the touch device in this step by using examples. It may be understood that the following example is used only for the purpose of description and not intended to limit the present disclosure.

FIG. 2 is an exemplary schematic diagram of the screen unlocking interface displayed by the touch device in this step. As shown in FIG. 2, in this example, the password unlocking area is surrounded by the shortcut unlocking area; the password unlocking area is designed into a circle, in which eight circular password buttons are distributed, where the eight circular password buttons are distributed in a ring; the shortcut unlocking area is distributed on the periphery of the password unlocking area and is concentric with the password unlocking area; four circular shortcut function buttons are distributed in an upper part and a lower part of the shortcut unlocking area, where icons (not illustrated) corresponding to functions, for example, icons corresponding to such functions as "camera", "telephone dialer", "short message", and "music player", are set on the shortcut function buttons.

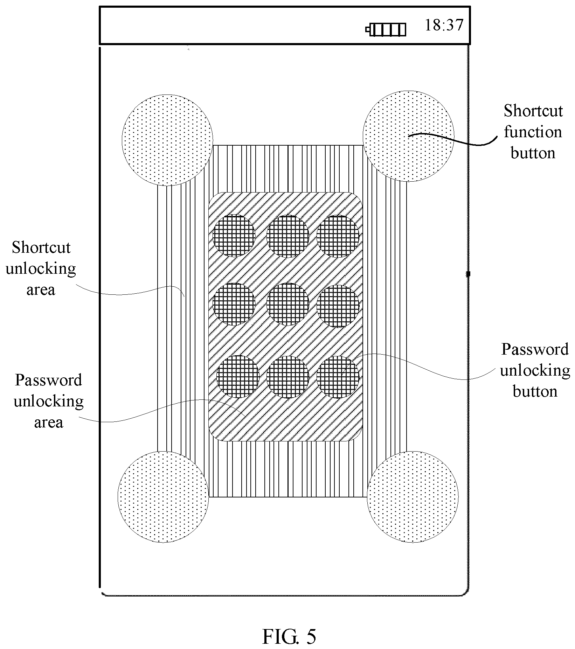

FIG. 5 is another exemplary schematic diagram of the screen unlocking interface displayed by the touch device in this step. As shown in FIG. 5, in this example, the password unlocking area is surrounded by the shortcut unlocking area; the password unlocking area is designed into a rectangle, where nine circular password buttons are distributed, where the nine password buttons are distributed in an array; the shortcut unlocking area is distributed on the periphery of the password unlocking area and is also designed into a rectangle; four circular shortcut function buttons are distributed at the upper vertex angles and lower vertex angles of the shortcut unlocking area, where icons (not illustrated) corresponding to functions, for example, icons corresponding to such functions as "camera", "telephone dialer", "short message", and "music player" are set on the four shortcut function buttons.

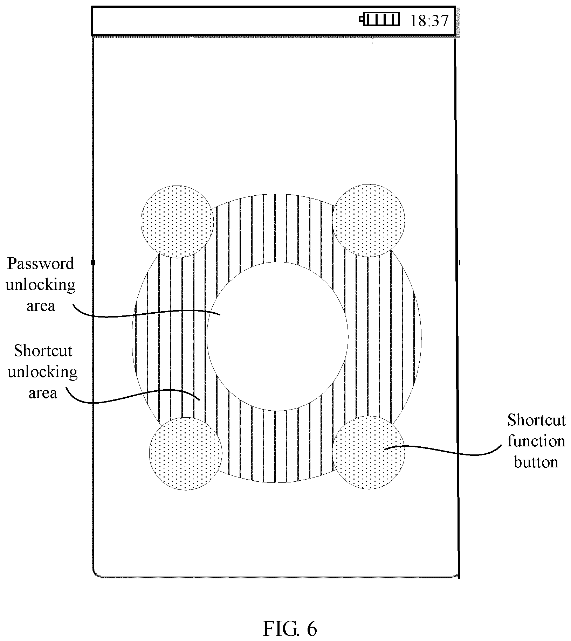

It should be noted that, alternatively, the password unlocking area may include no password button and is a blank area only. The user may input, through the blank area, a character or a pattern as a password to perform unlocking. For example, in another example of the screen unlocking interface displayed by the touch device in this step, as shown in FIG. 6, the password unlocking area is surrounded by the shortcut unlocking area; the password unlocking area is a circular blank area, and the shortcut unlocking area is concentric with the password unlocking area; four circular shortcut function buttons are distributed in the shortcut unlocking area, where icons (not illustrated) corresponding to functions, for example, icons corresponding to such functions as "camera", "telephone dialer", "short message", and "music player", are set on the shortcut function buttons.

It should be noted that for a small-sized device screen, for example, a handset screen, if the password unlocking area is surrounded by the shortcut unlocking area and the password unlocking area is not large enough, the user will easily slide out of the password unlocking area when inputting an unlocking password, causing inconvenience. In addition, if the password buttons in the password unlocking area are not far enough from the shortcut function buttons, misoperations may also be caused. Therefore, the size of the password unlocking area and the upper limit of the number of password buttons included in the password unlocking area, and the size of the shortcut unlocking area and the upper limit of the number of shortcut function buttons included in the shortcut unlocking area are not limited in the present disclosure, and a proper adjustment may be made according to the size of the screen of the touch device and user satisfaction.

It can be seen from the above that the password unlocking area on the screen unlocking interface is used to input a password and further authenticate the user identity, and the shortcut unlocking area on the screen unlocking interface is used to perform shortcut unlocking and activate corresponding functions. Pattern password unlocking and shortcut unlocking are performed on one interface, which reduces the waiting time of the user, and increases efficiency, thereby effectively improving user experience.

S12. Receive an unlocking patterns input by the user through the screen unlocking interface, where the unlocking pattern includes a password unlocking pattern input through the password unlocking area and a shortcut unlocking pattern input through the shortcut unlocking area.

After the screen unlocking interface is displayed on the screen of the touch device, the user slides to input a pattern on the unlocking interface by using a finger or a stylus to perform password unlocking and shortcut unlocking.

In this step, the user inputs an unlocking pattern through the screen unlocking interface, where the unlocking pattern refers to all patterns that the user inputs by sliding on the screen unlocking interface when performing screen unlocking. However, it may be understood that the password unlocking needs the input of a password unlocking pattern and the shortcut unlocking needs the input of a shortcut unlocking pattern, while in the aspect of the present disclosure, the foregoing two areas are located on the same screen unlocking interface, and therefore the process where the user performs password unlocking and shortcut unlocking is a successive process performed on one screen unlocking interface, that is, it may be understood that the password pattern input by the user is actually an unlocking pattern that includes the password unlocking pattern and the shortcut unlocking pattern. The password unlocking pattern is a part of the unlocking pattern input by the user and used to perform password unlocking, while the shortcut unlocking pattern is a part of the unlocking pattern input by the user and used to perform shortcut unlocking.

In the aspect of the present disclosure, the sequence of inputting patterns by the user is not limited. The user may first input the password unlocking pattern in the password unlocking area, and then enter the shortcut unlocking area to input the shortcut unlocking pattern, or the user may first input the shortcut unlocking pattern, and then enter the password unlocking area to input the password unlocking pattern. That is, in this step, the touch device may first receive the password unlocking pattern input by the user in the password unlocking area, and then receive the shortcut unlocking pattern which is input by the user in the shortcut unlocking area after the user inputs the password unlocking pattern in the password unlocking area; or, the touch device may first receive the shortcut unlocking pattern input by the user in the shortcut unlocking area, and then receive the password unlocking pattern which is input by the user in the password unlocking area after the user inputs the shortcut unlocking pattern in the shortcut unlocking area.

It may be understood that when the user performs screen unlocking through an unlocking interface, that is, when the user slides to input an unlocking pattern by using a stylus or a finger, the user generally does not raise the finger or the stylus in this process, but after completing the sliding over one area of the password unlocking area and the shortcut unlocking area, the user slides away from the area, and then enters the other area of the two areas until the whole unlocking pattern is input by sliding, that is, no matter whether the user first inputs the password unlocking pattern or first inputs the shortcut unlocking pattern, the two patterns may be successive and uninterrupted, that is, the password unlocking pattern and the shortcut unlocking pattern received by the touch device may be successive and uninterrupted.

It should be noted that, in an aspect of the present disclosure, the password unlocking pattern and the shortcut unlocking pattern input by the user may also be combined into one pattern, that is, the user needs only to input one pattern to perform both password unlocking and shortcut unlocking. For example, the user presses and holds a shortcut button and drags the shortcut button regularly according to a preset password unlocking pattern, so that the user performs both the password unlocking and the shortcut unlocking.

It may be further understood that, in this step, in addition to the password unlocking pattern and the shortcut unlocking pattern, the unlocking pattern input by the user may further include other patterns, for example, lines connecting the password unlocking pattern and the shortcut unlocking pattern, and other patterns input freely by the user. Therefore, in this step, when receiving the unlocking pattern input by the user, the touch device needs to detect the password unlocking pattern and the shortcut unlocking pattern from the unlocking pattern input by the user.

S13. Determine whether the password unlocking pattern input by the user is consistent with a preset password unlocking pattern.

To effectively ensure system security of the touch device, a main user of the touch device presets a password unlocking pattern in the touch device; if the main user or another user needs to perform screen unlocking to use the touch device, the unlocking succeeds only when the password unlocking pattern input by the main user or the another user is consistent with the password unlocking pattern preset by the main user; and if the password unlocking pattern input by the main user or the another user is inconsistent with the preset password unlocking pattern, the unlocking fails, thereby effectively ensuring the system security.

In this step, specifically, the touch device compares the detected password unlocking pattern with a preset password pattern to determine whether the detected password unlocking pattern is consistent with the preset password pattern.

S14. If the password unlocking pattern input by the user is consistent with the preset password unlocking pattern, unlock the screen to enter a function interface corresponding to the shortcut unlocking pattern.

In this step, when the password unlocking pattern input by the user is consistent with the preset password unlocking pattern, the touch device enters a function interface corresponding to the shortcut unlocking pattern input by the user. For example, if the user selects a "dialer" shortcut by using the shortcut unlocking pattern, in this step, when the password unlocking pattern input by the user is consistent with the preset password unlocking pattern, the touch device enters the "dialer" interface.

Alternatively, if the detected password unlocking pattern input by the user is inconsistent with the preset password unlocking pattern, the touch device keeps the locking state unchanged, and may send a password incorrect prompt to the user. The password incorrect prompt includes an icon prompt and/or a sound prompt, for example, a "password incorrect" dialog box displayed on the screen interface, or a "password incorrect" sound prompt.

It should be noted that, if the user only inputs the password unlocking pattern in the password unlocking area but does not enter the shortcut unlocking area to input the shortcut unlocking pattern, that is, the user does not select any shortcut and the touch device detects the password unlocking pattern only, the touch device considers by default that the shortcut unlocking pattern is null. In a case where the shortcut unlocking pattern is null, after confirming the password pattern subsequently, the touch device may directly enter the home screen or enter a default function interface.

In the screen unlocking method provided in the aspect of the present disclosure, a screen unlocking interface is displayed on a screen, where the screen unlocking interface includes a password unlocking area and a shortcut unlocking area; an unlocking pattern input by a user through the screen unlocking interface is received, where the unlocking pattern includes a password unlocking pattern input through the password unlocking area and a shortcut unlocking pattern input through the shortcut unlocking area; then, it is determined whether the password unlocking pattern input by the user is consistent with a preset password unlocking pattern; and if the password unlocking pattern input by the user is consistent with the preset password unlocking pattern, the screen is unlocked to enter a function interface corresponding to the shortcut unlocking pattern. It can be seen from the above that pattern password unlocking and shortcut unlocking can be completed on one interface through one interaction, which not only enhances the security of the touch device but also helps the user to enter a specific function quickly, thereby reducing the waiting time of the user, increasing efficiency, and effectively improving user experience.

To help a person skilled in the part to better understand the technical solution of the screen unlocking method provided in the aspect of the present disclosure, the screen unlocking method provided by the present disclosure is described in the following in detail with reference to specific aspects.

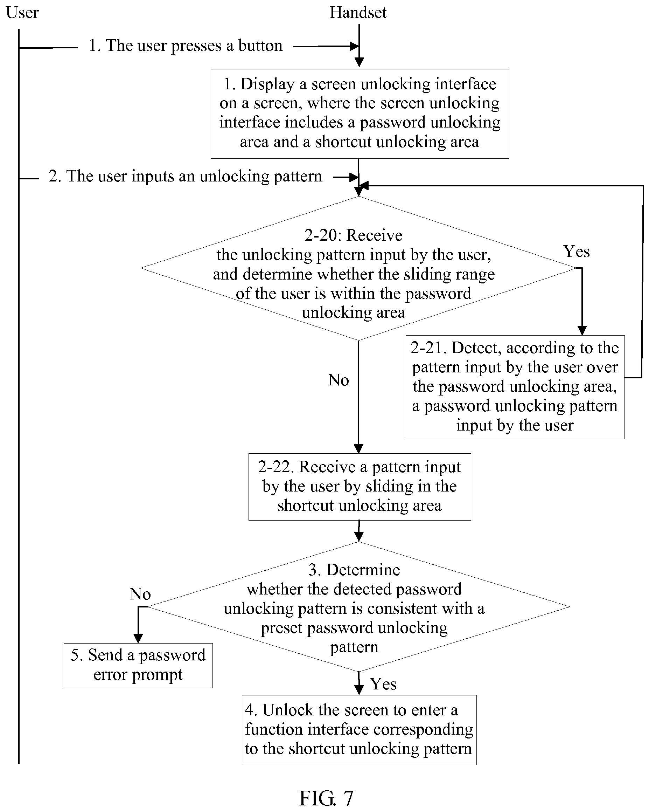

This aspect assumes that the touch device is a handset. As shown in FIG. 7, a screen unlocking method provided in this aspect includes the following steps:
1. A user presses a power button of a handset in a locked state, and the handset lightens a touch display screen, and displays a screen unlocking interface on the touch display screen.
   Specifically, in this step, the screen unlocking interface is described through the screen unlocking interface illustrated in FIG. 2 as an example; the screen unlocking interface includes a password unlocking area and a shortcut unlocking interface, where the password unlocking area is surrounded by the shortcut unlocking area; the password unlocking area is designed into a circle, in which eight circular password buttons are distributed, where the eight password buttons are distributed in a ring; the shortcut unlocking area is distributed on the periphery of the password unlocking area and is concentric with the password unlocking area; four circular shortcut function buttons are distributed at an upper part and a lower part of the shortcut unlocking area, where icons (not illustrated) corresponding to functions, for example, icons corresponding to such functions as "camera", "telephone dialer", "short message", and "music player" are set on the shortcut function buttons.
   It may be understood that this aspect is described only through the screen unlocking interface illustrated in FIG. 2 as an example, but the screen unlocking interface provided in this aspect is not limited to the screen unlocking interface illustrated in FIG. 2.
2. The user slides on the screen unlocking interface to input an unlocking pattern, and the handset receives the unlocking pattern input by the user.
   In this aspect, the user first inputs a password unlocking pattern in the password unlocking area, and then enters the shortcut unlocking area to input a shortcut unlocking pattern, that is, the handset first receives the password unlocking pattern, and then receives the shortcut unlocking pattern. Definitely, the handset may also first receive the shortcut unlocking pattern, and then receive the password unlocking pattern, which is not further described herein.
   In this step, the user begins to slide gestures on the screen unlocking interface to input a password unlocking pattern and a shortcut unlocking pattern successively; when the user slides gestures, the handset receives the unlocking patterns input by the user.
   Specifically, in this step of this aspect, the handset may mainly perform the following detailed steps:
   20. The handset receives an unlocking pattern input by the user by sliding in the password unlocking area, and determines whether the sliding range of the user is within the password unlocking area.
      If the sliding range of the user is within the password unlocking area, the handset considers that the user slides in the password unlocking area, and step 21 is performed; if the sliding range of the user is beyond the password unlocking area, the handset considers that the user slides away from the password unlocking area, and step 22 is performed.
   21. The handset detects, according to the pattern input by the user by sliding in the password unlocking area, the password unlocking pattern input by the user.
   22. The handset controls all the password buttons to become invalid, and stops detection of a password unlocking pattern; and receives a pattern input by the user by sliding in the shortcut unlocking area, and detects, according to the pattern input by the user by sliding in the shortcut unlocking area, whether the user slides to a specific shortcut function button and ends the sliding, that is, detects whether the user completes inputting the shortcut unlocking pattern; if yes, the handset considers that the user selects a function corresponding to the specific shortcut function button, and performs a subsequent password check process; otherwise, the handset continues the detection until it detects that the user slides to a specific shortcut function button and ends the sliding.
3. The handset determines whether the password unlocking pattern detected by the handset is consistent with a preset password unlocking pattern.
   If the password unlocking pattern detected by the handset is consistent with the preset password unlocking pattern, step 4 is performed; and if the detected password unlocking pattern input by the user is inconsistent with the preset password unlocking pattern, step 5 is performed.
4. The handset unlocks the screen to enter a function interface corresponding to the detected specific shortcut function button.
5. The handset sends a password incorrect prompt to the user.

In the screen unlocking method provided in this aspect, a screen unlocking interface includes both a password unlocking area and a shortcut unlocking area; and password unlocking and shortcut unlocking are performed by receiving unlocking patterns input by a user in the foregoing two areas respectively. Therefore, through a screen unlocking interface, the user can perform not only password unlocking but also shortcut unlocking, where the password unlocking can effectively ensure the system security of a touch device and the shortcut unlocking enables the user to enter a desired function interface quickly. Therefore, the user performs both password unlocking and shortcut unlocking by interacting with the touch device only once, which effectively shortens the unlocking time of the user. In addition, the operation is convenient, thereby effectively improving user experience.

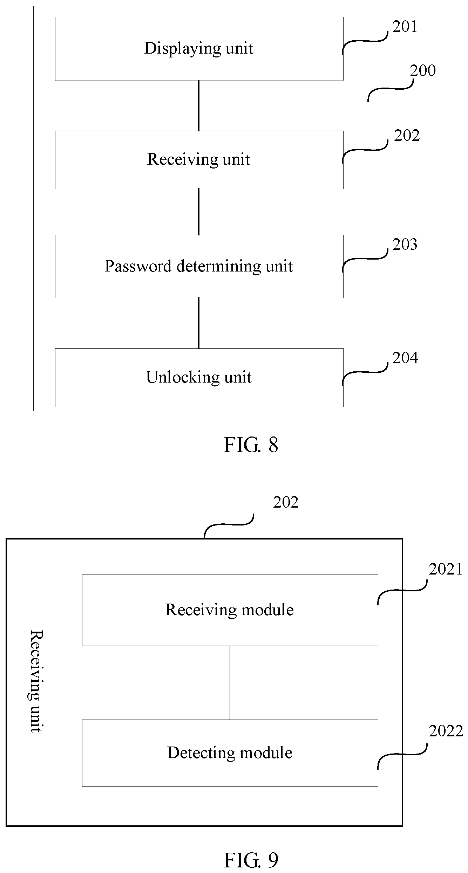

Correspondingly, an aspect of the present disclosure further provides a screen unlocking apparatus 200, as shown in FIG. 8, including:
a displaying unit 201, configured to display a screen unlocking interface on a screen, where the screen unlocking interface includes a password unlocking area and a shortcut unlocking area;
a receiving unit 202, configured to receive an unlocking pattern input by a user through the screen unlocking interface displayed by the displaying unit 201, where the unlocking pattern includes a password unlocking pattern input through the password unlocking area and a shortcut unlocking pattern input through the shortcut unlocking area;
a password determining unit 203, configured to determine whether the password unlocking pattern which is input by the user and received by the receiving unit is consistent with a preset password unlocking pattern; and
an unlocking unit 204, configured to: if the password determining unit 203 determines that the password unlocking pattern input by the user is consistent with the preset password unlocking pattern, unlock the screen to enter a function interface corresponding to the shortcut unlocking pattern.

In the screen unlocking apparatus provided in the aspect of the present disclosure, the screen unlocking apparatus has a screen unlocking interface, where the screen unlocking interface includes a password unlocking area and a shortcut unlocking area, that is, password unlocking and shortcut unlocking can be completed on one interface, which not only enhances the security of a touch device, but also helps the user to enter a specific function quickly, thereby reducing the waiting time of the user, increasing efficiency, and effectively improving user experience.

Specifically, in an aspect of the present disclosure, on the screen unlocking interface displayed by the displaying unit 201, positional relationships between the password unlocking area and the shortcut unlocking area on the screen unlocking interface may include but not be limited to the following three types:
First, on the screen unlocking interface, the password unlocking area may be surrounded by the shortcut unlocking area.
Second, on the screen unlocking interface, the shortcut unlocking area may be surrounded by the password unlocking area.
Third, on the screen unlocking interface, the password unlocking area and the shortcut unlocking area may be adjacent in a vertical distribution. Definitely, the password unlocking area and the shortcut unlocking area may also be adjacent in a horizontal distribution. It should be noted that, in this distribution manner, of the password unlocking area and the shortcut unlocking area, which area is on the left and which area is on the right, or which area is upper and which area is lower are not limited in the present disclosure. In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

Optionally, in an aspect of the present disclosure, the password unlocking area displayed by the displaying unit 201 may include at least two password buttons, and the user may input an unlocking password by pressing or sliding over these buttons according to a specific rule.

Specifically, in an aspect of the present disclosure, the shortcut unlocking area displayed by the displaying unit 201 may include at least two shortcut function buttons, and the user may perform shortcut unlocking by selectively pressing or sliding over a shortcut function button, so that the touch device enters a function interface corresponding to the shortcut function button.

It should be noted that the password unlocking area displayed by the displaying unit 201 may include no password button and is a blank area only. The user may input, through the blank area, a character or a pattern as a password to perform unlocking.

In this way, the password unlocking and the shortcut unlocking are completed on one interface, which not only enhances security but also implements fast unlocking. In addition, the operation is convenient, which effectively improves user experience.

After the screen unlocking interface is displayed on the screen of the touch device, the user slides to input a pattern on the unlocking interface by using a finger or a stylus to perform password unlocking and shortcut unlocking.

In the aspect of the present disclosure, the sequence of inputting patterns by the user is not limited. The user may first input a password unlocking pattern in the password unlocking area, and then input a shortcut unlocking pattern in the shortcut unlocking area, or the user may first input a shortcut unlocking pattern in the shortcut unlocking area, and then input a password unlocking pattern in the password unlocking area. That is, the receiving unit 202 may first receive the password unlocking pattern input by the user in the password unlocking area, and then receive the shortcut unlocking pattern which is input by the user in the shortcut unlocking area after the user inputs the password unlocking pattern in the password unlocking area; or, the receiving unit 202 may first receive the shortcut unlocking pattern input by the user in the shortcut unlocking area, and then receive the password unlocking pattern which is input by the user in the password unlocking area after the user inputs the shortcut unlocking pattern in the shortcut unlocking area.

In particular, as shown in FIG. 9, the receiving unit 202 specifically includes:
a receiving module 2021, configured to receive an unlocking pattern input by the user by sliding in the password unlocking area; and
a detecting module 2022, configured to detect, according to the unlocking pattern input by the user by sliding in the password unlocking area, a password unlocking pattern input by the user;
where, the receiving module 2021 is further configured to receive an unlocking pattern which is input by the user by sliding in the shortcut unlocking area after the user slides away from the password unlocking area; and
the detecting module 2021 is further configured to detect, according to the unlocking pattern input by the user in the shortcut unlocking area, a shortcut unlocking pattern input by the user.

In this case, the password determining unit 203 is specifically configured to determine whether the password unlocking pattern which is input by the user and detected by the detecting module 2022 is consistent with a preset password unlocking pattern. The unlocking unit 204 is specifically configured to unlock the screen to enter a function interface corresponding to the shortcut unlocking pattern detected by the detecting module 2022.

It may be understood that, when the user performs screen unlocking through an unlocking interface, that is, when the user slides to input an unlocking pattern by using a stylus or a finger, the user generally does not raise the finger or the stylus in this process, but after completing the sliding on one area of the password unlocking area and the shortcut unlocking area, the user slides away from the area, and then enters the other area of the foregoing two areas until the whole unlocking pattern is input by sliding, that is, no matter whether the user first inputs the password unlocking pattern or first inputs the shortcut unlocking pattern, the two patterns may be successive and uninterrupted, that is, in general cases, the password unlocking pattern and the shortcut unlocking pattern received by the receiving module 2021 are successive and uninterrupted.

It may be further understood that, in this step, in addition to the password unlocking pattern and the shortcut unlocking pattern, the unlocking pattern input by the user may further include other patterns, for example, lines connecting the password unlocking pattern and the shortcut unlocking pattern, and other patterns input freely by the user. Therefore, in this step, when the unlocking pattern input by the user is received, the detecting module 2022 needs to detect the password unlocking pattern and the shortcut unlocking pattern from the unlocking pattern input by the user. In this way, the password unlocking performed in the password unlocking area and the shortcut unlocking performed in the shortcut unlocking area can be completed by the user on one interface only. The operation is convenient, which reduces the waiting time of the user, increases efficiency, and effectively improves user experience.

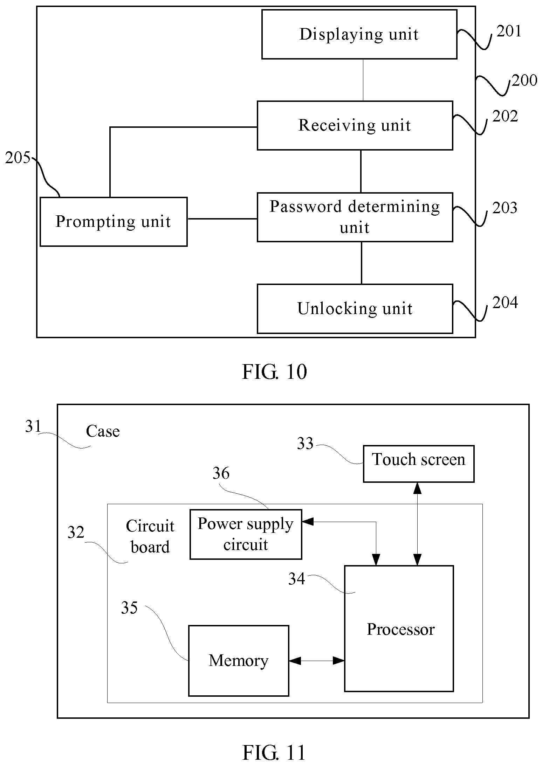

Optionally, in an aspect of the present disclosure, as shown in FIG. 10, the apparatus 200 further includes a prompting unit 205 configured to: if the password determining unit 203 determines that the password unlocking pattern input by the user is inconsistent with the preset password unlocking pattern, send a password incorrect prompt to the user.

Correspondingly, an aspect of the present disclosure further provides a touch device. As shown in FIG. 11, the touch device includes a case 31, a circuit board 32, a touch display screen 33, a processor 34, a memory 35, and a power supply circuit 36.

In the touch device:
the touch display screen 33 is arranged on the case 31;
the circuit board 32 is arranged in space enclosed by the case 31;
the processor 34 and the memory 35 are disposed on the circuit board 32;
the memory 35 is configured to store data;
the power supply circuit 36 is configured to supply power to circuits or components of the touch device; and
the processor 34 is configured to process data and is specifically configured to:
   display a screen unlocking interface on the touch display screen 33, where the screen unlocking interface includes a password unlocking area and a shortcut unlocking area;
   receive an unlocking pattern input by a user through the unlocking interface of the touch display screen 33, where the unlocking pattern includes a password unlocking pattern input through the password unlocking area and a shortcut unlocking pattern input through the shortcut unlocking area;
   determine whether the password unlocking pattern input by the user is consistent with a preset password unlocking pattern; and
   if the password unlocking pattern input by the user is consistent with the preset password unlocking pattern, unlock the screen to enter a function interface corresponding to the shortcut unlocking pattern.

Optionally, for a division of function executing units in the processor 34, reference may be made to the foregoing aspect of the screen unlocking apparatus, which is not described herein again.

It may be understood that, in this aspect, the memory 35 stores a program code corresponding to the functions performed by the processor 34; and when the processor 34 performs the foregoing functions, it reads the program code stored in the memory 35 to perform the functions corresponding to the read program code.

In the touch device provided in the aspect of the present disclosure, a screen unlocking interface includes a password unlocking area and a shortcut unlocking area; after an unlocking pattern input by a user through the screen unlocking interface is received, it is determined whether a password unlocking pattern input by the user is consistent with a preset password unlocking pattern; and if the password unlocking pattern input by the user is consistent with the preset password unlocking pattern, the screen is unlocked to enter a function interface corresponding to a shortcut unlocking pattern. In this way, pattern password unlocking and shortcut unlocking can be completed on one interface, which not only enhances security of the touch device but also helps the user to enter a specific function quickly, thereby reducing the waiting time of the user, increasing efficiency, and effectively improving user experience.

Specifically, in an aspect of the present disclosure, on the screen unlocking interface displayed by the displaying unit 33, positional relationships between the password unlocking area and the shortcut unlocking area on the screen unlocking interface may include but not be limited to the following three types:
First, on the screen unlocking interface, the password unlocking area may be surrounded by the shortcut unlocking area.
Second, on the screen unlocking interface, the shortcut unlocking area may be surrounded by the password unlocking area.
Third, on the screen unlocking interface, the password unlocking area and the shortcut unlocking area may be adjacent in a vertical distribution. Definitely, the password unlocking area and the shortcut unlocking area may also be adjacent in a horizontal distribution. It should be noted that, in this distribution manner, of the password unlocking area and the shortcut unlocking area, which area is on the left and which area is on the right, or which area is upper and which area is lower are not limited in the present disclosure. In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

Optionally, in an aspect of the present disclosure, the password unlocking area displayed by the touch display screen 33 may include at least two password buttons, and the user may input an unlocking password by pressing or sliding over these buttons according to a specific rule. Specifically, in an aspect of the present disclosure, the shortcut unlocking area displayed by the displaying unit 33 may include at least two shortcut function buttons, and the user may perform shortcut unlocking by selectively pressing or sliding over a shortcut function button, so that the touch device enters a function interface corresponding to the shortcut function button.

It should be noted that the password unlocking area displayed by the touch display screen 33 may include no password button and is a blank area only. The user may input, through the blank area, a character or a pattern as a password to perform unlocking.

After the screen unlocking interface is displayed on the screen of the touch device, the user slides to input a pattern on the unlocking interface by using a finger or a stylus to perform password unlocking and shortcut unlocking.

For example, the touch device provided in the aspect of the present disclosure may be any terminal device with a screen locking function, such as a handset, a tablet computer, or a personal digital assistant.

It should be noted that the aspect of the present disclosure is applicable to a touch device with any operating system, for example, a touch device with an operating system such as Android, wp, or ios, and may be implemented by making a modification to any operating system, which is not limited in the present disclosure.

It should be noted that the aspects in this specification are described in a progressive manner. For the same or similar parts in the aspects, reference may be made to the relevant parts. Each aspect describes in emphasis what is different from other aspects. In particular, since the apparatus aspects are basically similar to the method aspects, the descriptions of the apparatus aspects are relatively simple. For details about related content, reference may be made to the descriptions of the method aspects.

It should be noted that the foregoing apparatus aspects are merely exemplary. The units that are described as separate parts may be physically separate or not separate. The parts that are displayed as the units may be physical units or not be physical units. That is, the parts may be located in one place or distributed in multiple network units. Some or all of the modules may be selected according to the actual need to achieve the objectives of the technical solutions provided in aspects of the present disclosure. In addition, in the accompanying drawings of the apparatus aspects provided by the present disclosure, the connection relations between the modules indicate that the modules have communication connections, which may be specifically implemented as one or more communication buses or signal cables. A person of ordinary skill in the art can understand and implement the present disclosure without creative efforts.

According to the description about the aspects, a person skilled in the art are fully aware that the present disclosure may be implemented by using software plus necessary universal hardware, and definitely may also be implemented by using such dedicated hardware as an application specific integrated circuit, a dedicated CPU, a dedicated memory, and dedicated parts and components. In general, all functions that can be performed by a computer program can be easily implemented by using corresponding hardware. In addition, specific hardware structures used to implement the same function may be varied, for example, analog circuit, digital circuit, dedicated circuit, or the like. However, in most cases, the present disclosure is preferably implemented by using the software programs. Based on such an understanding, the technical solutions of the present disclosure or the part contributing to the prior art may be embodied by a software product. The software product may be stored in a readable storage medium, for example, a floppy disk, a USB drive, a removable hard disk, a read-only memory, ROM, a random access memory, RAM, a magnetic disk, or a compact disk of a computer, and include several instructions used to enable a computer device (for example, a personal computer, a server, or a network device, or the like) to perform the methods provided by the aspects of the present disclosure.

The foregoing descriptions are merely specific implementation manners of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A touch screen unlocking method, comprising:
displaying (S11) a screen unlocking interface on a screen, wherein the screen unlocking interface comprises a password unlocking area and a shortcut unlocking area; **characterised by**
receiving (S12) an unlocking pattern touch input by a user through the screen unlocking interface, wherein the unlocking pattern comprises a password unlocking pattern touch input through the password unlocking area and a shortcut unlocking pattern touch input through the shortcut unlocking area, wherein the unlocking pattern and the shortcut unlocking pattern are successive and uninterrupted;
determining (S13) whether the password unlocking pattern touch input by the user is consistent with a preset password unlocking pattern; and
unlocking (S14) the screen to enter a function interface corresponding to the shortcut unlocking pattern if the password unlocking pattern touch input by the user is consistent with the preset password unlocking pattern;
wherein:
the password unlocking area is surrounded by the shortcut unlocking area; or,
the shortcut unlocking area is surrounded by the password unlocking area; or,
the password unlocking area and the shortcut unlocking area are adjacent in a vertical or horizontal distribution;
wherein the receiving an unlocking pattern touch input by a user through the screen unlocking interface specifically comprises:
receiving an unlocking pattern touch input by the user by sliding in the password unlocking area;
detecting, according to the unlocking pattern touch input by the user by sliding in the password unlocking area, the password unlocking pattern touch input by the user;
receiving an unlocking pattern which is input by the user in the shortcut unlocking area after the user slides away from the password unlocking area; and
detecting, according to the unlocking pattern touch input by the user by sliding in the shortcut unlocking area, the shortcut unlocking pattern touch input by the user;
the determining whether the password unlocking pattern touch input by the user is consistent with a preset password unlocking pattern specifically comprises:
determining whether the detected password unlocking pattern touch input by the user is consistent with the preset password unlocking pattern; and
the unlocking the screen to enter a function interface corresponding to the shortcut unlocking pattern specifically comprises:
unlocking the screen to enter a function interface corresponding to the detected shortcut unlocking pattern.

2. The method according to claim 1, wherein:
the password unlocking area comprises at least two password buttons, wherein the at least two password buttons are distributed in a ring or arranged in an array; and/or
the shortcut unlocking area comprises at least two shortcut function buttons, wherein the at least two shortcut function buttons are distributed in a ring or arranged in an array.

3. The method according to claim 1 or 2, wherein after the determining whether the password unlocking pattern touch input by the user is consistent with a preset password unlocking pattern, the method further comprises:
sending a password incorrect prompt to the user if the password unlocking pattern touch input by the user is inconsistent with the preset password unlocking pattern.

4. A touch device, comprising a case (31), a circuit board (32), a touch display screen (33), a processor (34), a memory (35), and a power supply circuit (36), wherein:
the touch display screen (33) is arranged on the case, the circuit board is arranged in space enclosed by the case, and the processor and the memory are disposed on the circuit board;
the memory (35) is configured to store data;
the power supply circuit (36) is configured to supply power to circuits or components of the touch device;
the processor (34) is configured to process data and is configured to:
display a screen unlocking interface on the touch display screen, wherein the screen unlocking interface comprises a password unlocking area and a shortcut unlocking area;
receive an unlocking pattern touch input by a user through the unlocking interface of the touch display screen, wherein the unlocking pattern comprises a password unlocking pattern touch input through the password unlocking area and a shortcut unlocking pattern touch input through the shortcut unlocking area, wherein the unlocking pattern and the shortcut unlocking pattern are successive and uninterrupted;
determine whether the password unlocking pattern touch input by the user is consistent with a preset password unlocking pattern; and
unlock the screen to enter a function interface corresponding to the shortcut unlocking pattern if the password unlocking pattern touch input by the user is consistent with the preset password unlocking pattern;
wherein:
on the screen unlocking interface displayed by the touch display screen:
the password unlocking area is surrounded by the shortcut unlocking area; or,
the shortcut unlocking area is surrounded by the password unlocking area; or,
the password unlocking area and the shortcut unlocking area are adjacent in a vertical or horizontal distribution;
wherein the receiving an unlocking pattern touch input by a user through the screen unlocking interface specifically comprises:
receiving an unlocking pattern touch input by the user by sliding in the password unlocking area;
detecting, according to the unlocking pattern touch input by the user by sliding in the password unlocking area, the password unlocking pattern touch input by the user;
receiving an unlocking pattern which is input by the user in the shortcut unlocking area after the user slides away from the password unlocking area; and
detecting, according to the unlocking pattern touch input by the user by sliding in the shortcut unlocking area, the shortcut unlocking pattern touch input by the user;
the determining whether the password unlocking pattern touch input by the user is consistent with a preset password unlocking pattern specifically comprises:
determining whether the detected password unlocking pattern touch input by the user is consistent with the preset password unlocking pattern; and
the unlocking the screen to enter a function interface corresponding to the shortcut unlocking pattern specifically comprises:
unlocking the screen to enter a function interface corresponding to the detected shortcut unlocking pattern.

5. The touch device according to claim 4, wherein:
the password unlocking area displayed by the touch display screen comprises at least two password buttons, wherein the at least two password buttons are distributed in a ring or arranged in an array; and/or
the shortcut unlocking area displayed by the touch display screen comprises at least two shortcut function buttons, wherein the at least two shortcut function buttons are distributed in a ring or arranged in an array.

## Patentansprüche

1. Entsperrverfahren für einen Berührungsbildschirm, das Folgendes umfasst:
Anzeigen (S11) einer Bildschirmentsperrschnittstelle auf einem Bildschirm, wobei die Bildschirmentsperrschnittstelle einen Passwort-Entsperrbereich und einen "Shortcut"-Entsperrbereich umfasst; **gekennzeichnet durch**
Empfangen (S12) einer Entsperrmusterberührungseingabe durch einen Anwender über die Bildschirmentsperrschnittstelle, wobei das Entsperrmuster eine Passwort-Entsperrmuster-Berührungseingabe über den Passwort-Entsperrbereich und eine "Shortcut"-Entsperrmuster-Berührungseingabe über den "Shortcut"-Entsperrbereich umfasst und das Entsperrmuster und das "Shortcut"-Entsperrmuster aufeinanderfolgend und ununterbrochen sind,
Bestimmen (S13), ob die Passwort-Entsperrmuster-Berührungseingabe durch den Anwender mit einem voreingestellten Passwort-Entsperrmuster konsistent ist; und
Entsperren (S14) des Bildschirms, um eine Funktionsschnittstelle, die dem "Shortcut"-Entsperrmuster entspricht, einzugeben, wenn die Passwort-Entsperrmuster-Berührungseingabe durch den Anwender mit dem voreingestellten Passwort-Entsperrmuster konsistent ist; wobei
der Passwort-Entsperrbereich durch den "Shortcut"-Entsperrbereich umgeben ist oder der "Shortcut"-Entsperrbereich durch den Passwort-Entsperrbereich umgeben ist oder der Passwort-Entsperrbereich und der "Shortcut"-Entsperrbereich in einer vertikalen oder horizontalen Verteilung benachbart sind; wobei
das Empfangen eines einer Entsperrmusterberührungseingabe durch einen Anwender über die Bildschirmentsperrschnittstelle insbesondere Folgendes umfasst:
Empfangen einer Entsperrmusterberührungseingabe durch den Anwender durch Schieben im Passwort-Entsperrbereich;
Detektieren gemäß der Entsperrmusterberührungseingabe durch den Anwender durch Schieben im Passwort-Entsperrbereich der Passwort-Entsperrmuster-Berührungseingabe durch den Anwender;
Empfangen eines Entsperrmusters, das durch den Anwender im "Shortcut"-Entsperrbereich eingegeben wird, nachdem der Anwender vom Passwort-Entsperrbereich wegschiebt; und
Detektieren gemäß der Entsperrmusterberührungseingabe durch den Anwender durch Schieben im "Shortcut"-Entsperrbereich der "Shortcut"-Entsperrmuster-Berührungseingabe durch den Anwender; wobei
das Bestimmen, ob die Passwort-Entsperrmuster-Berührungseingabe durch den Anwender mit einem voreingestellten Passwort-Entsperrmuster konsistent ist, insbesondere Folgendes umfasst:
Bestimmen, ob die detektierte Passwort-Entsperrmuster-Berührungseingabe durch den Anwender mit dem voreingestellten Passwort-Entsperrmuster konsistent ist; und
das Entsperren des Bildschirms, um eine Funktionsschnittstelle, die dem "Shortcut"-Entsperrmuster entspricht, einzugeben, insbesondere Folgendes umfasst:
Entsperren des Bildschirms, um eine Funktionsschnittstelle einzugeben, die dem detektierten "Shortcut"-Entsperrmuster entspricht.

2. Verfahren nach Anspruch 1, wobei
der Passwort-Entsperrbereich mindestens zwei Passwortschaltflächen umfasst, wobei die mindestens zwei Passwortschaltflächen in einem Ring verteilt sind oder in einer Matrix angeordnet sind; und/oder
der "Shortcut"-Entsperrbereich mindestens zwei Verknüpfungsfunktionsschaltflächen umfasst, wobei die mindestens zwei Verknüpfungsfunktionsschaltflächen in einem Ring verteilt sind oder in einer Matrix angeordnet sind.

3. Verfahren nach Anspruch 1 oder 2, wobei das Verfahren nach dem Bestimmen, ob die Passwort-Entsperrmuster-Berührungseingabe, die durch den Anwender eingegeben wurde, mit einem voreingestellten Passwort-Entsperrmuster konsistent ist, ferner Folgendes umfasst:
Senden eines Hinweises auf ein nicht korrektes Passwort zum Anwender, wenn die Passwort-Entsperrmuster-Berührungseingabe durch den Anwender mit dem voreingestellten Passwort-Entsperrmuster nicht konsistent ist.

4. Berührungsempfindliche Einrichtung, die ein Gehäuse (31), eine Leiterplatte (32), einen berührungsempfindlichen Anzeigebildschirm (33), einen Prozessor (34), einen Speicher (35) und eine Leistungsversorgungsschaltung (36) umfasst, wobei
der berührungsempfindliche Anzeigebildschirm (33) am Gehäuse angeordnet ist, die Leiterplatte in einem Raum, der durch das Gehäuse eingeschlossen ist, angeordnet ist und der Prozessor und der Speicher an der Leiterplatte angeordnet sind;
der Speicher (35) konfiguriert ist, Daten zu speichern;
die Leistungsversorgungsschaltung (36) konfiguriert ist, den Schaltungen oder Komponenten der berührungsempfindlichen Einrichtung Leistung zuzuführen;
der Prozessor (34) konfiguriert ist, Daten zu verarbeiten, und zu Folgendem konfiguriert ist:
Anzeigen einer Bildschirmentsperrschnittstelle auf dem berührungsempfindlichen Anzeigebildschirm, wobei die Bildschirmentsperrschnittstelle einen Passwort-Entsperrbereich und einen "Shortcut"-Entsperrbereich umfasst;
Empfangen einer Entsperrmusterberührungseingabe durch einen Anwender über die Entsperrschnittstelle des berührungsempfindlichen Anzeigebildschirms, wobei das Entsperrmuster eine Passwort-Entsperrmuster-Berührungseingabe über den Passwort-Entsperrbereich und eine "Shortcut"-Entsperrmuster-Berührungseingabe über den "Shortcut"-Entsperrbereich umfasst und das Entsperrmuster und das "Shortcut"-Entsperrmuster aufeinanderfolgend und ununterbrochen sind;
Bestimmen ob die Passwort-Entsperrmuster-Berührungseingabe durch den Anwender mit einem voreingestellten Passwort-Entsperrmuster konsistent ist; und
Entsperren des Bildschirms, um eine Funktionsschnittstelle, die dem "Shortcut"-Entsperrmuster entspricht, einzugeben, wenn die Passwort-Entsperrmuster-Berührungseingabe durch den Anwender mit dem voreingestellten Passwort-Entsperrmuster konsistent ist; wobei
in der Bildschirmentsperrschnittstelle, die durch den berührungsempfindlichen Anzeigebildschirm angezeigt wird,
der Passwort-Entsperrbereich durch den "Shortcut"-Entsperrbereich umgeben ist oder der "Shortcut"-Entsperrbereich durch den Passwort-Entsperrbereich umgeben ist oder der Passwort-Entsperrbereich und der "Shortcut"-Entsperrbereich in einer vertikalen oder horizontalen Verteilung benachbart sind; wobei
das Empfangen eines einer Entsperrmusterberührungseingabe durch einen Anwender über die Bildschirmentsperrschnittstelle insbesondere Folgendes umfasst:
Empfangen einer Entsperrmusterberührungseingabe durch den Anwender durch Schieben im Passwort-Entsperrbereich;
Detektieren gemäß der Entsperrmusterberührungseingabe durch den Anwender durch Schieben im Passwort-Entsperrbereich der Passwort-Entsperrmuster-Berührungseingabe durch den Anwender;
Empfangen eines Entsperrmusters, das durch den Anwender im "Shortcut"-Entsperrbereich eingegeben wird, nachdem der Anwender vom Passwort-Entsperrbereich wegschiebt; und
Detektieren gemäß der Entsperrmusterberührungseingabe durch den Anwender durch Schieben im "Shortcut"-Entsperrbereich der "Shortcut"-Entsperrmuster-Berührungseingabe durch den Anwender; wobei
das Bestimmen, ob die Passwort-Entsperrmuster-Berührungseingabe durch den Anwender mit einem voreingestellten Passwort-Entsperrmuster konsistent ist, insbesondere Folgendes umfasst:
Bestimmen, ob die detektierte Passwort-Entsperrmuster-Berührungseingabe durch den Anwender mit dem voreingestellten Passwort-Entsperrmuster konsistent ist; und
das Entsperren des Bildschirms, um eine Funktionsschnittstelle, die dem "Shortcut"-Entsperrmuster entspricht, einzugeben, insbesondere Folgendes umfasst:
Entsperren des Bildschirms, um eine Funktionsschnittstelle einzugeben, die dem detektierten "Shortcut"-Entsperrmuster entspricht.

5. Berührungsempfindliche Einrichtung nach Anspruch 4, wobei
der Passwort-Entsperrbereich, der durch den berührungsempfindlichen Anzeigebildschirm angezeigt wird, mindestens zwei Passwortschaltflächen umfasst, wobei die mindestens zwei Passwortschaltflächen in einem Ring verteilt sind oder in einer Matrix angeordnet sind; und/oder
der "Shortcut"-Entsperrbereich, der durch den berührungsempfindlichen Anzeigebildschirm angezeigt wird, mindestens zwei Verknüpfungsfunktionsschaltflächen umfasst, wobei die mindestens zwei Verknüpfungsfunktionsschaltflächen in einem Ring verteilt sind oder in einer Matrix angeordnet sind.

## Revendications

1. Procédé de déverrouillage d'écran tactile, comprenant les étapes suivantes :
afficher (S11) une interface de déverrouillage d'écran sur un écran, où l'interface de déverrouillage d'écran comprend une zone de déverrouillage de mot de passe et une zone de déverrouillage de raccourci ; **caractérisé par**
la réception (S12) d'une entrée tactile de motif de déverrouillage effectuée par un utilisateur par l'intermédiaire de l'interface de déverrouillage d'écran, où le motif de déverrouillage comprend une entrée tactile de motif de déverrouillage de mot de passe par l'intermédiaire de la zone de déverrouillage de mot de passe et une entrée tactile de motif de déverrouillage de raccourci par l'intermédiaire de la zone de déverrouillage de raccourci, où le motif de déverrouillage et le motif de déverrouillage de raccourci sont successifs et sans interruption ;
la détermination (S13) du fait que l'entrée tactile de motif de déverrouillage de mot de passe effectuée par l'utilisateur soit cohérente, ou non, avec un motif de déverrouillage de mot de passe prédéfini ; et
le déverrouillage (S14) de l'écran pour accéder à une interface de fonction correspondant au motif de déverrouillage de raccourci si l'entrée tactile du motif de déverrouillage de mot de passe effectuée par l'utilisateur est cohérente avec le motif de déverrouillage de mot de passe prédéfini ;
où :
la zone de déverrouillage de mot de passe est entourée par la zone de déverrouillage de raccourci ; ou,
la zone de déverrouillage de raccourci est entourée par la zone de déverrouillage de mot de passe ; ou,
la zone de déverrouillage de mot de passe et la zone de déverrouillage de raccourci sont adjacentes dans une distribution verticale ou horizontale ;
où la réception d'une entrée tactile de motif de déverrouillage effectuée par un utilisateur par l'intermédiaire de l'interface de déverrouillage d'écran comprend spécifiquement les étapes suivantes :
recevoir une entrée tactile de motif de déverrouillage effectuée par l'utilisateur en glissant dans la zone de déverrouillage de mot de passe ;
détecter, en fonction de l'entrée tactile de motif de déverrouillage effectuée par l'utilisateur en glissant dans la zone de déverrouillage de mot de passe, l'entrée tactile de motif de déverrouillage de mot de passe ;
recevoir un motif de déverrouillage qui est entré par l'utilisateur dans la zone de déverrouillage de raccourci après que l'utilisateur a glissé hors de la zone de déverrouillage de mot de passe ; et
détecter, en fonction de l'entrée tactile de motif de déverrouillage effectuée par l'utilisateur en glissant dans la zone de déverrouillage par raccourci, l'entrée tactile de motif de déverrouillage de raccourci effectuée par l'utilisateur ;
déterminer si l'entrée tactile de motif de déverrouillage de mot de passe effectuée par l'utilisateur est cohérente avec un motif de déverrouillage de mot de passe prédéfini comprend spécifiquement l'étape suivante :
déterminer si l'entrée tactile de motif de déverrouillage de mot de passe détectée effectuée par l'utilisateur est cohérente avec le motif de déverrouillage de mot de passe prédéfini ; et
déverrouiller l'écran pour accéder à une interface de fonction correspondant au motif de déverrouillage de raccourci comprend spécifiquement l'étape suivante :
déverrouiller l'écran pour accéder à une interface de fonction correspondant au motif de déverrouillage de raccourci détecté.

2. Procédé selon la revendication 1, dans lequel :
la zone de déverrouillage de mot de passe comprend au moins deux boutons de mot de passe, où les au moins deux boutons de mot de passe sont répartis en anneau ou disposés en tableau ; et/ou
la zone de déverrouillage de raccourci comprend au moins deux boutons de fonction de raccourci, où les au moins deux boutons de fonction de raccourci sont répartis sur un anneau ou disposés en tableau.

3. Procédé selon la revendication 1 ou la revendication 2, dans lequel, après avoir déterminé si l'entrée tactile de motif de déverrouillage de mot de passe effectuée par l'utilisateur est cohérente avec un motif de déverrouillage de mot de passe prédéfini, le procédé comprend en outre l'étape suivante :
envoyer une invite de mot de passe incorrect à l'utilisateur si l'entrée tactile de motif de déverrouillage de mot de passe effectuée par l'utilisateur n'est pas cohérente avec le motif de déverrouillage de mot de passe prédéfini.

4. Dispositif tactile, comprenant un boîtier (31), une carte de circuit imprimé (32), un écran d'affichage tactile (33), un processeur (34), une mémoire (35), et un circuit d'alimentation électrique (36), dans lequel :
l'écran d'affichage tactile (33) est disposé sur le boîtier, la carte de circuit imprimé est disposée dans un espace entouré par le boîtier, et le processeur et la mémoire sont disposés sur la carte de circuit imprimé ;
la mémoire (35) est configurée pour stocker des données ;
le circuit d'alimentation électrique (36) est configuré pour alimenter électriquement les circuits ou les composants du dispositif tactile ;
le processeur (34) est configuré pour traiter des données et est configuré pour :
afficher une interface de déverrouillage d'écran sur l'écran tactile, où l'interface de déverrouillage d'écran comprend une zone de déverrouillage de mot de passe et une zone de déverrouillage de raccourci ;
recevoir une entrée tactile de motif de déverrouillage effectuée par un utilisateur par l'intermédiaire de l'interface de déverrouillage de l'écran d'affichage tactile, où le motif de déverrouillage comprend une entrée tactile de motif de déverrouillage de mot de passe par l'intermédiaire de la zone de déverrouillage de mot de passe et une entrée tactile de motif de déverrouillage de raccourci par l'intermédiaire de la zone de déverrouillage de raccourci, où le motif de déverrouillage et le motif de déverrouillage de raccourci sont successifs et sans interruption ;
déterminer si l'entrée tactile de motif de déverrouillage de mot de passe effectuée par l'utilisateur est cohérente avec un motif de déverrouillage de mot de passe prédéfini ; et
déverrouiller l'écran pour accéder à une interface de fonction correspondant au motif de déverrouillage de raccourci si l'entrée tactile du motif de déverrouillage de mot de passe effectuée par l'utilisateur est cohérente avec le motif de déverrouillage de mot de passe prédéfini ;
où :
sur l'interface de déverrouillage d'écran affichée par l'écran d'affichage tactile :
la zone de déverrouillage de mot de passe est entourée par la zone de déverrouillage de raccourci ; ou,
la zone de déverrouillage de raccourci est entourée par la zone de déverrouillage de mot de passe ; ou,
la zone de déverrouillage de mot de passe et la zone de déverrouillage de raccourci sont adjacentes dans une distribution verticale ou horizontale ;
où la réception d'une entrée tactile de motif de déverrouillage effectuée par un utilisateur par l'intermédiaire de l'interface de déverrouillage d'écran comprend spécifiquement les étapes suivantes :
recevoir une entrée tactile de motif de déverrouillage effectuée par l'utilisateur en glissant dans la zone de déverrouillage de mot de passe ;
détecter, en fonction de l'entrée tactile de motif de déverrouillage effectuée par l'utilisateur en glissant dans la zone de déverrouillage de mot de passe, l'entrée tactile de motif de déverrouillage de mot de passe effectuée par l'utilisateur ;
recevoir un motif de déverrouillage qui est entré par l'utilisateur dans la zone de déverrouillage de raccourci après que l'utilisateur a glissé hors de la zone de déverrouillage de mot de passe ; et
détecter, en fonction de l'entrée tactile de motif de déverrouillage effectuée par l'utilisateur en glissant dans la zone de déverrouillage de raccourci, l'entrée tactile de motif de déverrouillage de raccourci effectuée par l'utilisateur ;
déterminer si l'entrée tactile de motif de déverrouillage de mot de passe effectuée par l'utilisateur est cohérente avec un motif de déverrouillage de mot de passe prédéfini comprend spécifiquement l'étape suivante :
déterminer si l'entrée tactile de motif de déverrouillage de mot de passe détectée effectuée par l'utilisateur est cohérente avec le motif de déverrouillage de mot de passe prédéfini ; et
déverrouiller l'écran pour accéder à une interface de fonction correspondant au motif de déverrouillage de raccourci comprend spécifiquement l'étape suivante :
déverrouiller l'écran pour accéder à une interface de fonction correspondant au motif de déverrouillage de raccourci détecté.

5. Dispositif tactile selon la revendication 4, dans lequel :
la zone de déverrouillage de mot de passe affichée par l'écran d'affichage tactile comprend au moins deux boutons de mot de passe, où les au moins deux boutons de mot de passe sont répartis en anneau ou disposés en tableau ; et/ou la zone de déverrouillage de raccourci affichée par l'écran d'affichage tactile comprend au moins deux boutons de fonction de raccourci, où les au moins deux boutons de fonction de raccourci sont répartis sur un anneau ou disposés en tableau.
